# EUROPEAN PATENT APPLICATION

(11) **EP 1 569 059 A1**
(43) Date of publication of application: **31.08.2005**
(21) Application number: 03775893.5
(22) Date of filing: 26.11.2003
(51) Int. Cl.: G05B 19/418

(54) **PART MAKESHIFT PLANNING SYSTEM AND PART MAKESHIFT PLANNING METHOD**

(30) Priority: 29.11.2002 JP 2002348587
(71) Applicant: HONDA MOTOR CO., Ltd., Tokyo 107-8556 (JP)
(72) Inventor: MATSUMOTO, Masaki, Honda Motor Co. Ltd., Tokyo 107-8556 (JP); ITO, Koji, Hitachi Powdered Metals Co. Ltd., Tokyo 101-0021 (JP); UEMURA, Hironori, Nippon Konpo Unyu Soko Co. Ltd., Sayama-shi, Saitama 350-1335 (JP)
(74) Representative: Donné, Eddy
(86) International application number: PCT/JP2003/015075
(87) International publication number: WO 2004/051385

(57) **Abstract**

This invention is capable of knowing in advance when the inventory will be depleted and reflecting that on the production plan.
Based on the production quantity that is supplied from the factory-production-plan database (D/B) 4, the scheduled shipping quantity supplied from the shipping-instruction file 6, the ordered quantity of repair parts supplied from the received-order database (D/B) 1, and the inventory quantity supplied from the depot-inventory file 3, the days when the inventory will become minus are known, and a production-plan list is created and supplied to the factory-production-plan database (D/B) 4 and reflected in the future production plan.

## Description

### BACKGROUND OF THE INVENTION

### Field of the Invention

This invention relates to a rehandling planning system and rehandling planning method, and more particularly to a rehandling planning system and rehandling planning method for creating a rehandling plan based on the amount of inventory and ordered quantity.

### Description of the Related Art

Conventionally, lot production is performed for mass produced models and small parts. The number of parts produced during lot production is a multiple of the number of economic lots, and is a number that exceeds the ordered quantity. Parts that are produced at a factory are stored for each customer in a warehouse (depot) on the side of the mass production factory, and then supplied to the factory from there. The number of repair parts for a mass produced model is small when compared with the ordered number, so basically the repair parts are shipped from stock in inventory. Therefore, when an order for repair parts is received, first, the depot inventory file is checked to find which warehouse they are stored in, then order forms and removal instructions are made up for each part and sent to each depot. At each depot, the ordered parts are removed from the shelves according to the removal instructions and shipped.
There is also a method in which it is possible to accurately follow changes in future demand by storing in advance a number of unit periods of time based on the period of time from when an order for a product is received until it is delivered, and then reading the estimated shipping quantity for that number of unit periods of time and calculating the total value of estimated shipping quantities for the read number of unit periods of time as the proper estimated inventory quantity (for example, refer to Japanese patent publication 2002-297731 (Fig. 1)).

However, in the conventional method, in the case of a product of which there are many models such as a bicycle, mass-produced models are not always being produced, and sometimes one or two months may go by without being produced. Therefore, even though there is an order for repair parts, the inventory at the warehouse may already have hit bottom. Also, after receiving an order it takes time for the factory to set up for production and start production. Therefore, in this kind of case, there was a problem that as result, even though the model is a mass-produced model, the customer who needs a repair part must wait a long time.
Also, in the method disclosed in Japanese patent publication 2002-297731 (Fig. 1), there is the problem in that it may not be able to be applied in the case where there is inventory in a plurality of warehouses, and the part is shipped from the warehouses.

This invention takes into consideration these kinds of conditions and makes it possible to prevent inventory from becoming minus by predicting changes in inventory when creating a production plan.

### DISCLOSURE OF INVENTION

The rehandling system of claim 1 is a rehandling system that creates a rehandling plan from the ordered quantity of a specified part and the inventory quantity, and comprises: an ordered-quantity-memory means of storing the ordered quantity of a specified part; a production-plan-creation means of creating a production plan that sets the daily production quantity for the part; a scheduled-shipping-quantity-output means of outputting the scheduled shipping quantity of the part; an inventory-quantity-memory means of storing the inventory quantity for the part; and a production-plan-list-creation list means of creating a production-plan list for correcting the production plan for the part based on the ordered quantity, production quantity, scheduled shipping quantity and inventory quantity.

Also, it is possible to comprise: an inventory-amount-memory means of calculating and storing the amount of inventory after shipping the part based on the ordered quantity, production quantity, scheduled shipping quantity and inventory quantity; and a comparison means of comparing which is larger between the amount of inventory of the part that is stored by the inventory-amount-memory means and the ordered quantity of the part that is stored by the ordered-quantity-memory means.

Also, it is possible to issue an instruction for instructing additional production of the part when the comparison result by the comparison means determines that the ordered quantity is greater than the inventory quantity.

The rehandling planning method of claim 4 is a rehandling planning method of creating a rehandling plan from the ordered quantity of a specified part and the inventory quantity, and comprises: an ordered-quantity-memory step of storing the ordered quantity of a specified part; a production-plan-creation step of creating a production plan that sets the daily production quantity for the part; a scheduled-shipping-quantity-output step of outputting the scheduled shipping quantity of the part; an inventory-quantity-memory step of storing the inventory quantity for the part; and a production-plan-list-creation step of creating a production-plan list for correcting the production plan for the part based on the ordered quantity, production quantity, scheduled shipping quantity and inventory quantity.

### BRIEF DESCRIPTION OF THE DRAWINGS

Fig. 1 shows the job flow for an embodiment of the rehandling planning system of this invention.
Fig. 2 is a drawing showing an example of the daily rehandling list.

### DESCRIPTION OF THE PREFERRED EMBODIMENTS

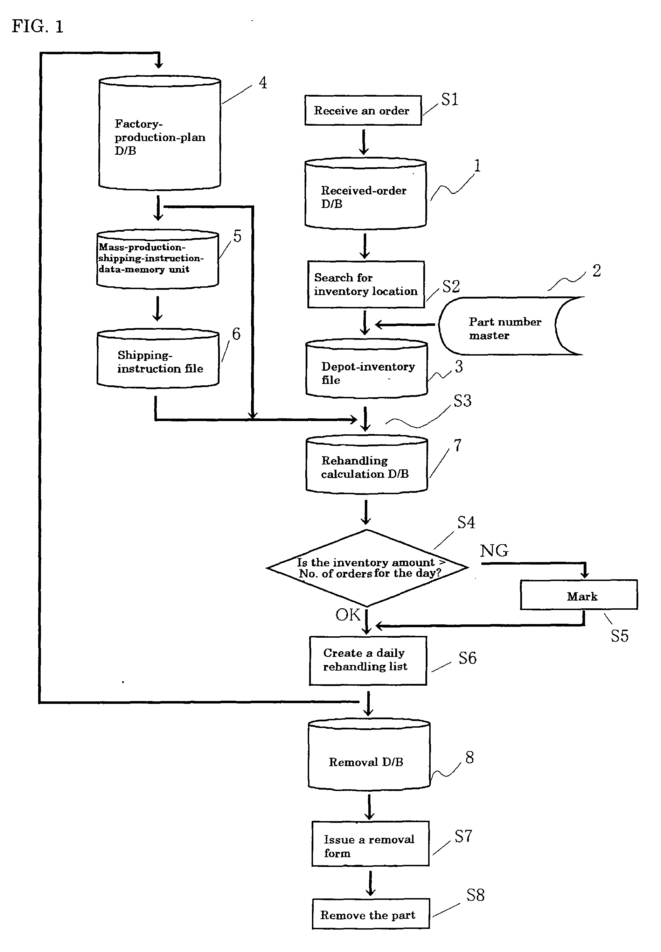

The construction and operation of an embodiment of the rehandling planning system of this invention is explained below. Fig. 1 is a drawing showing the construction and job flow of the operation of this embodiment.

As shown in the same figure, this embodiment comprises: a received-order database (D/B) 1 that stores the ordered quantity of ordered repair parts; a part-number master 2 that stores the part numbers given to each type of repair part; a depot-inventory file 3 that stores the quantity of inventory for the repair part at the depot (warehouse); a factory-production-plan database (D/B) 4 that stores and outputs the production plan quantity (daily scheduled production quantity (= production quantity)) for a repair part set according to the production plan of the factory; a mass-production-shipping-instruction-data-memory unit 5 that creates and outputs instruction data for giving instructions for the daily shipping quantity of the repair part; a shipping-instruction file 6 that stores and outputs the daily scheduled shipping quantity for the repair part; a rehandling-calculation database (D/B) 7 that stores the data necessary for performing rehandling calculation that includes: the ordered quantity of the repair part obtained from the received-order database 1, the number of production plans obtained from the factory-production-plan database 4, the scheduled shipping quantity obtained from the shipping-instruction file 6 and the inventory quantity obtained from the depot-inventory file 3; and a removal database (D/B) 8 that stores the number of repair parts actually removed.

Each database is created inside the memory apparatus of the personal computer or workstation (not shown in the figure), and connected over a network such that data can be sent and received.

Next, the processing procedure of the embodiment will be explained with reference to Fig. 1. First, in step S1, when there is an order for a repair part, the order for the repair part is received. After that, received-order data, comprising the ordered quantity and the name of the repair part, is supplied to the received-order database 1. The received-order database 1 correlates the name of the ordered repair part with the ordered quantity and stores them.

Next, in step S2, the part number of the repair part from the received-order database 1 is read from the part-number master 2, and based on this part number, an inventory location (depot (warehouse)) having this repair part as inventory is searched for from the depot-inventory file 3.

In step S3, the daily production quantity (input quantity) is obtained from the factory-production-plan database 4, and the scheduled shipping quantity is obtained from the shipping-instruction file 6, the inventory quantity is obtained from the depot-inventory file 3, and the ordered quantity is obtained from the received-order database 1. Moreover, the obtained production quantity, scheduled shipping quantity, inventory quantity and ordered quantity are supplied to the rehandling-calculation database 7 and stored.

Next, in step S4, the production quantity is added to the inventory quantity and the scheduled shipping quantity is subtracted for each day, and the resulting inventory amount is then compared with the ordered quantity (= number of orders). As a result, in step S5, when the amount of inventory is less than the ordered quantity, or in other words, when the ordered quantity is greater than the amount of inventory, a specified mark is given for that day to indicate that the inventory will become '0' or be insufficient. After that, the process advances to step S6.

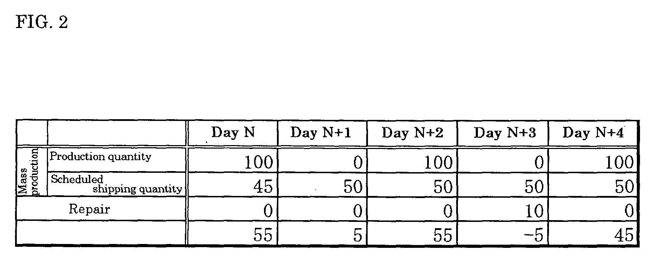

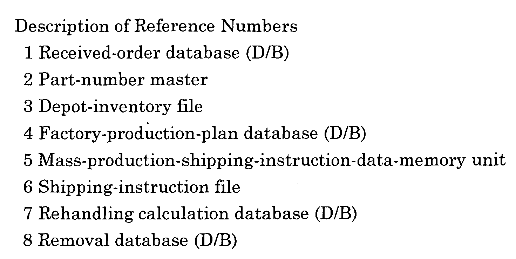

On the other hand, in step S4, when it is determined that the amount of inventory is greater than the ordered quantity, the process advances to step S6, and a daily rehandling list showing the daily rehandling status is created as shown in Fig. 2. In this example, as shown in the same figure, on day 'N' the production (stock) quantity is 100, the scheduled shipping quantity is 45, the number of orders for the repair part is 0 and the inventory quantity 55. On day 'N+1' the production (stock) quantity is 0, the scheduled shipping quantity is 50, the number of orders for the repair part is 0 and the inventory quantity 5. On day 'N+2' the production (stock) quantity is 100, the scheduled shipping quantity is 50, the number of orders for the repair part is 0 and the inventory quantity 55. On day 'N+3' the production (stock) quantity is 0, the scheduled shipping quantity is 50, the number of orders for the repair part is 10 and the inventory quantity -5. On day 'N+4' the production (stock) quantity is 100, the scheduled shipping quantity is 50, the number of orders for the repair part is 0 and the inventory quantity 45. The created daily rehandling list is supplied to the factory-production-plan database 4, where it is reflected on the future production plan, and it is supplied to the removal database 8 and stored.

From the daily rehandling list, the factory-production-plan database 4 is able to know on which days there is insufficient inventory, so the production plan is remade, and by increasing the production amount, it is possible to prevent the inventory from becoming insufficient.

The daily rehandling list as shown in Fig. 2 is stored in the removal database 8. In step S7, the daily rehandling list is obtained from the removal database 8, and a removal form is created and issued. In step 8, the removal process is performed according to the removal form.

As explained above, in this embodiment, from the ordered quantity and the amount of inventory, it is possible to know beforehand times when the inventory will be insufficient, so it is possible to make a production plan according to the ordered quantity, and thus it is possible to prevent the inventory from becoming insufficient as much as possible, and prevent the user from having to wait a long time for a necessary repair part.

The construction and operation of the embodiment described above is an example, and needless to say, it is possible to make changes within a range that does not deviate from the scope of the invention.

### Industrial Applicability

As described above, with the rehandling planning system and rehandling planning method of this invention, the ordered quantity of a specified part is stored, a production plan for setting the daily production quantity for the part is created, the scheduled shipping quantity of the part is output, the inventory quantity of the part is stored and a production-plan for correcting the production plan for the part is created based on the ordered quantity, production quantity, scheduled shipping quantity and inventory quantity, so it is possible to know in advance when the inventory will become insufficient and to remake the production plan, and thus it is possible to keep the inventory from becoming insufficient.

## Claims

1. A rehandling system that creates a rehandling plan from the ordered quantity of a specified part and the inventory quantity, and comprising:
an ordered-quantity-memory means of storing the ordered quantity of a specified part;
a production-plan-creation means of creating a production plan that sets the daily production quantity for said part;
a scheduled-shipping-quantity-output means of outputting the scheduled shipping quantity of said part;
an inventory-quantity-memory means of storing the inventory quantity for said part; and
a production-plan-list-creation means of creating a production-plan list for correcting the production plan for said part based on said ordered quantity, said production quantity, said scheduled shipping quantity and said inventory quantity.

2. The rehandling planning system of claim 1 further comprising:
an inventory-amount-memory means of calculating and storing the amount of inventory after shipping said part based on said ordered quantity, said production quantity, said scheduled shipping quantity and said inventory quantity; and
a comparison means of comparing which is larger between said amount of inventory of said part that is stored by said inventory-amount-memory means and said ordered quantity of said part that is stored by said ordered-quantity-memory means.

3. The rehandling planning system of claim 2 wherein
it is possible to issue an instruction for instructing additional production of said part when the comparison result by said comparison means determines that said ordered quantity is greater than said inventory quantity.

4. A rehandling planning method of creating a rehandling plan from the ordered quantity of a specified part and the inventory quantity, and comprising:
an ordered-quantity-memory step of storing the ordered quantity of a specified part;
a production-plan-creation step of creating a production plan that sets the daily production quantity for said part;
a scheduled-shipping-quantity-output step of outputting the scheduled shipping quantity of said part;
an inventory-quantity-memory step of storing the inventory quantity for said part; and
a production-plan-list-creation step of creating a production-plan list for correcting the production plan for said part based on said ordered quantity, said production quantity, said scheduled shipping quantity and said inventory quantity.
